(19) Europäisches Patentamt
European Patent Office
Office européen des brevets

(11) EP 3 883 978 B1

(12) **EUROPEAN PATENT SPECIFICATION**

(45) Date of publication and mention of the grant of the patent:
**19.07.2023 Bulletin 2023/29**

(21) Application number: **18940922.0**

(22) Date of filing: **23.11.2018**

(51) International Patent Classification (IPC):
***C08F 236/10*** *(2006.01)* ***C08C 19/44*** *(2006.01)*
***C08C 19/22*** *(2006.01)* ***C08C 19/25*** *(2006.01)*

(52) Cooperative Patent Classification (CPC):
(C-Sets available)
**C08C 19/25; C08C 19/22; C08C 19/44;**
**C08F 236/10;** C08F 236/06; Y02T 10/86 (Cont.)

(86) International application number:
**PCT/RU2018/000768**

(87) International publication number:
**WO 2020/106174 (28.05.2020 Gazette 2020/22)**

(54) **METHOD FOR PREPARING RANDOM LOW VINYL COPOLYMERS, COPOLYMERS PREPARED BY THIS METHOD, AND RUBBER MIXTURES BASED ON THESE COPOLYMERS**

VERFAHREN ZUR HERSTELLUNG VON BELIEBIGEN VINYLARMEN COPOLYMEREN, NACH DIESEM VERFAHREN HERGESTELLTE COPOLYMERE UND KAUTSCHUKMISCHUNGEN AUF BASIS DIESER COPOLYMERE

PROCÉDÉ DE PRÉPARATION DE COPOLYMÈRES ALÉATOIRES À FAIBLE TENEUR EN VINYLE, COPOLYMÈRES PRÉPARÉS PAR CE PROCÉDÉ ET MÉLANGES DE CAOUTCHOUC BASÉS SUR CES COPOLYMÈRES

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**29.09.2021 Bulletin 2021/39**

(73) Proprietor: **Public Joint Stock Company "Sibur Holding"**
**Tobolsk, Tyumen region 626150 (RU)**

(72) Inventors:
- **POLUKHIN, Evgeny Leonidovich**
  **Voronezh, 394028 (RU)**
- **RUMIANTCEVA, Afina Leonidovna**
  **Voronezh, 394038 (RU)**
- **POPOVA, Svetlana Borisovna**
  **Rossosh, 396658 (RU)**

(74) Representative: **Peters, Andreas**
**Hannke Bittner & Partner**
**Patent- und Rechtsanwälte mbB**
**Prüfeninger Straße 1**
**93049 Regensburg (DE)**

(56) References cited:
**RU-C1- 2 058 322**
**RU-C1- 2 339 651**
**RU-C1- 2 538 591**
**US-A1- 2018 016 424**
**US-A1- 2018 171 053**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).



**(Cont. next page)**

(52) Cooperative Patent Classification (CPC): (Cont.)

C-Sets
**C08F 236/10, C08F 4/56;**
C08F 236/06, C08F 212/08

## Description

### Field of the invention

The invention relates to the industry of synthetic rubbers used in the production of tires, rubber products, in electrical and other fields, in particular, the invention relates to random copolymers of conjugated dienes and vinyl aromatic monomers, wherein the copolymer has a low content of vinyl groups, as well as to rubber mixtures based on these copolymers, and to a method for preparing said copolymers.

### Description of the related art

Application GB994726A describes a linear random copolymer prepared from diene, preferably 1,3-butadiene or isoprene, and an aromatic vinyl-substituted compound. The content of the diene in the copolymer is characterized by the structure (variants):

(1) a cis-1,4 structure of at least 30% and a 1,2 structure not in excess of 12%, wherein the diene is butadiene or pentadiene, or

(2) a cis-1,4 structure of at least 70% and a 3,4 structure not in excess of 15% and substantially no 1,2 content, wherein the diene is isoprene.

The copolymerization process is carried out in the presence of a lithium-based catalyst. The process can be continuous. The lithium-based catalyst is either metallic lithium or a lithium hydrocarbon. An electron donor additive is not used. The polymerization may be effected in bulk or in a hydrocarbon solvent. Vinyl-aromatic compounds can be styrene, alpha-methylstyrene, beta-methylstyrene, para-methylstyrene, 1- and 2-vinylnaphthalene.

However, the styrene-butadiene rubber of the present invention has a high content of block styrene, which adversely affects the complex of elastic-hysteresis characteristics.

Application GB1029445A discloses a method for preparing conjugated diene polymers. A polymerization catalyst includes (a) an organolithium compound of the formula $R(Li)_x$, or an organosodium compound of the formula $R(Na)_x$, wherein R is a hydrocarbon radical and (b) an organic compound corresponding to one of the following formulas:

(1)

R'M,

(2)

$R'(YM)_n$,

(3)

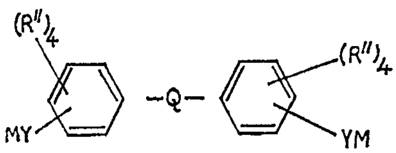

(4)

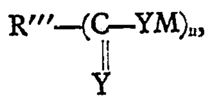

(5)

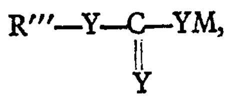

and

(6)

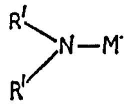

wherein R' is a hydrocarbon radical, M is Li when component (a) is organosodium and sodium, potassium, rubidium or cesium, when (a) is an organolithium compound, R" is hydrogen or a hydrocarbon radical, Q is selected from the following radicals:

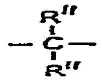 , 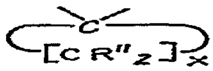

and $-S_y-$,

wherein x is an integer of 4 or 5, y is an integer from 1 to 3, R" is a hydrocarbon radical, Y is oxygen or sulfur, and n is an integer from 1 to 3. The catalyst is used for the polymerization of dienes or mixtures of diene with a vinyl substituted aromatic hydrocarbon. The catalyst is prepared in advance or *in situ.*

The description of the patent teaches that this method provides random low vinyl copolymers. The invention also makes it possible to control the vinyl content both in conjugated diene homopolymers and in random copolymers.

A disadvantage of the invention is that polymerization is carried out in the presence of alkali metal salts of carboxylic acids, as well as alcoholates and phenolates of alkali metals. Carboxylic acid salts cause breaks in active chains, phenolates are susceptible to metalation, and most rubidium and cesium alcoholates are insoluble in hydrocarbon solvents. According to the application, potassium alcoholates are used without an electron donor additive, which results in a high content of block styrene in the polymer.

Patent RU2377258 describes method for preparing butadiene polymers and copolymers of butadiene with styrene. The polymers are prepared by continuous solution polymerization. The method is carried out in a hydrocarbon solvent in the presence of an organolithium compound and a modifying additive. The used modifying additive is a reaction product of alkali metal lapramolate with tetrahydrofurfuryl alcohol, sodium and an organolithium compound. The catalyst complex contains an organolithium compound and a modifying additive. The hydrocarbon solvent contains toluene or xylene. After polymerisation of monomers, a blending[2] agent, which is tetraethoxysilane or silicon tetrachloride, is added to the reaction mass. Before separation, oil used as a softening agent is added to the polymer solution. The method of preparing polymers in accordance with the invention provides polybutadiene and copolymers of butadiene with styrene with regulated content of 1,2-links in the diene part (from 10 to 70 wt.%) at high temperature.

The indicated technical result is provided by using a modifying additive - sodium laprafurfurilate. A disadvantage is the need for advance preparation of this additive, which requires a separate production.

Low vinyl styrene-butadiene polymers and methods for their preparation are known from RU2562458. The method comprises polymerization of monomers in the presence of an initiator and at least one polar agent selected from compounds of Formula 1:

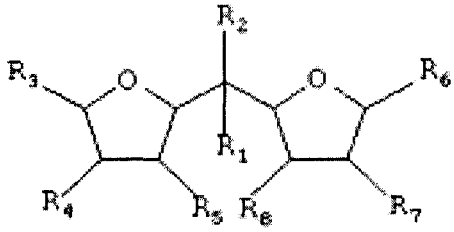

Formula I

1,2-diene is added to the polymerization process. The molar ratio of 1,2-diene to the active initiator is from 0.1 to 1.0. The molar ratio of the polar agent to the active initiator is from 0.05 to 0.6. A polymer-containing composition is also described that comprises monomer units of styrene and 1,3-butadiene. The polymer has at least the following characteristics: A) the vinyl content is from 12 to 40 wt.% based on the weight of polymerized butadiene in the polymer, B) the styrene block content is less than 8 wt.% based on the weight of styrene in the polymer, and C) the styrene content is from 10 to 50 wt.% based on the polymer weight. The technical result is in achieving high monomer conversion levels with minimal levels of residual monomers.

However, this method does not provide butadiene-styrene rubbers characterized simultaneously by a low content of 1,2-units and the absence of block styrene. The use of polar additives in the proposed method at a molar ratio of 0.05 to 0.3 cannot avoid the formation of block styrene, the presence of which in the polymer adversely affects the properties of rubber prepared on the basis of this copolymer.

Patent US7884168 discloses methods for preparing polymers consisting of a vinyl aromatic monomer (20-40 wt.%) and a conjugated diolefin monomer (60-80 wt.%). According to the proposed method, the content of 1,2-units in the polymer varies from 8 to 12%.

In this patent, strong electron-donor additives such as tetramethylethylenediamine (TMEDA) are used. A low content of 1,2-units can be achieved by using such electron-donor additives only when these additives are added to active lithium in small amounts, otherwise low content of vinyl units cannot be obtained. The resulting polymer has a high content of block styrene, which adversely affects the properties of rubber prepared on the basis of this polymer.

Patent application US3944528 discloses a method for preparing copolymers of a conjugated diene and a vinyl-substituted aromatic hydrocarbon, using a potassium-modified organolithium catalyst. The catalyst is prepared by dissolving equimolar quantities of 4-nonylphenol (or other 4-alkylphenols) and potassium *tert*-butylate in heptane. Potassium *tert*-butylate is dissolved, and a solution of potassium nonylphenolate with tert-butanol is formed.

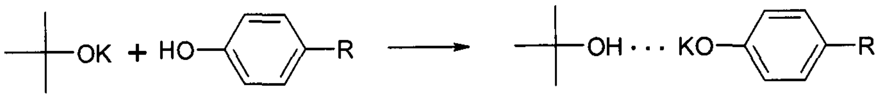

This complex is used as electron-donor additive (ED)/catalyst with a Li/K ration of 2 to 80. Lithium phenolate is formed in reaction of *tert*-butanol with phenol, and the resulting *tert*-butanol forms a soluble complex with lithium phenolate.

However, the formed complexes comprise alcohol that causes deactivation of growing polymer chains. As a consequence, the consumption of the organolithium initiator to obtain styrene-butadiene copolymers with a given Mooney viscosity and molecular weight characteristics. In addition, the used co-catalyst is not completely dissolved in hydrocarbons and forms an unstable precipitating emulsion. This precipitate accumulates and clogs elements of technological equipment.

Patent application US3903019 discloses the preparation of polymer solution by using a catalyst complex of barium di-tert-alkoxide and a di-butyl magnesium compound. Polymers and rubbers can be prepared from monomers by using the new catalyst complex of barium di-*tert*-alkoxide and a di-butyl magnesium compound. In particular, homo- and copolymers of butadiene with styrene prepared in the presence of this catalyst are characterized by a low content of vinyl (6-10%) and a high content of trans-1,4-units (80-85%). In addition, the copolymer has a random comonomer sequence distribution.

A disadvantage of the invention is a low polymerization rate because of the use of an organomagnesium compound in complex with barium alcoholate as an initiator. Another significant disadvantage is an increased gel formation caused by the absence of the chain transfer processes.

Patent application US4129705A discloses a polymerization process. This is a method of homopolymerization of conjugated dienes and copolymerization of conjugated dienes with other dienes or vinyl aromatic compounds to form

elastomers in the presence of a catalyst system consisting essentially of (a) an organolithium initiator and (b) a tercatalyst system comprising ($b_1$) a compound of barium or strontium or calcium, ($b_2$) an organometallic compound of aluminum or zinc, and ($b_3$) an alkali metal alcoholate ether or amine. According to the proposed invention, the prepared polymers are characterized by a low content of 1,2-units and a high content of trans-1,4-units.

As disclosed in the application, the used tetra-catalytic system comprises complexes of organometallic compounds of aluminum and zinc with organolithium compounds. However, such complexes are not stable over time and, as a consequence, their use does not provide a polymer with a desired target Mooney viscosity.

Patent application US4933401A discloses a catalyst composition for polymerization of conjugated diene, and a method for preparing a conjugated diene polymer. The catalyst system for polymerization of conjugated dienes comprises the following components:

(a) an organolithium-aluminum compound presented by the formula:

$$\mathbf{LiAlR^1R^2R^3R^4},$$

wherein $R^1$ to $R^4$, which may be the same or different, represent alkyl groups having 1 to 20 carbon atoms or aryl groups,

(b) an organobarium-aluminum compound represented by the formula:

$$\mathbf{Ba(AlR^1R^2R^3\,R^4)_2}$$

or

$$\mathbf{Ba[AlR^1R^2R^3(OR^4)]_2},$$

wherein $R^1$ to $R^4$ are defined above,

(c) a lithium alkoxide represented by the formula:

$$\mathbf{LiOR^5},$$

wherein $R^5$ represents an alkyl group having 1 to 20 carbon atoms, an aryl group, or a hydrocarbon group containing at least one heteroatom selected from the group consisting of oxygen and nitrogen.

Polymer or copolymer obtained by polymerization with the above catalyst composition is characterized by a high trans-1,4 bond content, a low vinyl bond content and a low cis-1,4 bond content.

However, the proposed method has a number of disadvantages, in particular: the need for separate preparation of the catalyst systems by using additional equipment, and low reproducibility of Mooney viscosity measurements and microstructure characteristics of the resulting polymer due to instability of the composition of the final catalyst complex. In addition, the polymerization, using barium aluminate-based catalyst systems, runs at a low rate, and monomer conversion is low.

Patent application US5959039A discloses a rubber composition for use in tires, which comprises both high and low molecular weight polymer components. The rubber composition that comprises a high-molecular-weight polymer component containing bound styrene in an amount of not greater than 30 wt.% is a styrene-butadiene copolymer or a conjugated diene polymer, such as polybutadiene, and has a weight-average molecular weight of at least $30\times10^4$; and a low-molecular-weight polymer component containing bound styrene in an amount of not greater than 30 wt.% is a styrene-butadiene copolymer or a conjugated diene polymer, such as polybutadiene, and has a weight-average molecular weight of from $0.2\times10^4$ to $8\times10^4$. In addition, the provided examples demonstrate that the obtained polymers are characterized by a low vinyl linkage content.

A significant disadvantage of the method disclosed in the application is a high content of a low-molecular-weight component in the polymer. This diversely affects rolling resistance of the rubbers produced by the method according to the invention. In addition, the claimed catalyst systems are free of electron donor compounds capable of chelating active lithium, which does not allow avoiding the presence of block styrene in the resulting copolymers.

Potassium-based catalyst systems used for the preparation of rubber polymers are known from patent US7825202B2. The catalyst system, in one embodiment, includes an organolithium compound and a potassium alkyl borohydride or potassium alkyl aluminum hydride of the formula: $(R)_3A^-(H)K^+$, wherein A is boron or aluminum, H is hydrogen, K is potassium, and R, which is the same or different, is H, a $C_1$-$C_{10}$ alkyl, a $C_3$-$C_{10}$ cycloalkyl, phenyl, or phenyl substituted with $C_1$-$C_{10}$ alkyl or a $C_3$-$C_{10}$ cycloalkyl, with the proviso that at least one R is a $C_1$-$C_{10}$ alkyl, and further wherein any two R groups may optionally be part of a carbocyclic ring. The rubbery polymers can have low to

medium vinyl content, i.e., from about 10% to about 40%, and are useful in tire tread rubber compounds.

However, the use of the catalyst system according to the proposed method gives low rates of polymerization and an increased formation of a high-molecular-weight component, which, in turn, leads to an increased gel formation and as a result to clogging and damaging of the equipment.

Patent RU2339651 discloses a method for preparing polybutadiene or copolymers of butadiene with styrene by polymerization of appropriate monomers in a hydrocarbon solvent in the presence of an initiating system, characterized in that the initiating system is a complex of an organolithium compound and a modifying additive obtained by reaction of alkali metal lapramolate with tetrahydrofurfuryl alcohol, metallic magnesium and sodium (potassium) at a molar ratio of 1:2-4:1-2:0-2, respectively. The technical effect is to obtain polybutadiene and copolymers of butadiene with styrene with the controlled content of 1,2-units in the diene part of from 9 to 75 wt.%, a reduced level of macromolecules with a weight of more than $10^6$ g/mol (up to 5 wt.%) at a temperatures of more than 60°C.

Patent RU2598075 describes a method for preparing butadiene homopolymers and copolymers of butadiene with styrene. The method includes polymerization of corresponding monomers in a hydrocarbon solvent in the presence of an organolithium-based initiating system and a modifying additive based on a mixture of amine-containing alcoholates of barium, potassium, sodium (or lithium), calcium (or magnesium) at an equivalent ratio of barium:potassium:sodium(or lithium):calcium(or magnesium) of 1:[0.05-4.0]:[0.05-1.0]:[0.05-1.0], wherein the step of polymerization further includes adding an electron donor, and the process is carried out at a molar ratio of organolithium compound:electron donor:modifying additive of 1.0:[0.01-2.0]:[0.2-2.0]. The technical result is the possibility of synthesis of polymers in a wide range of molecular weight (weight-average molecular weight from $100\times10^3$ to $700\times10^3$ g/mol), with a controlled content of 1,2-units in the butadiene part (from 9 to 85 %) and the content of gel fraction of less than 0.050 %.

However, according to this method, there is a need to separate industrial-scale synthesis of the modifying additive, which requires individual equipment. In addition, the production of random copolymers requires a high consumption of potassium alcoholate, and since the groups of potassium alcoholate are part of the polyfunctional molecules of the modifying additive that contains structural fragments of lapramol and tetrahydrofurfuryl alcohol, its separate delivery is not possible. Thus, it is obvious that the supply of compounds with these groups, which, in turn, makes it impossible to prepare low vinyl butadiene-styrene copolymers, increases with an increase in the amount of potassium alcoholate.

The closest in technical essence and achieved technical result is a method proposed in application RU94024075, providing (co)polymers by polymerization of conjugated dienes or by copolymerization of said dienes with each other or with vinyl aromatic compounds in a hydrocarbon solvent in the presence of catalyst consisting of an organolithium compound and hydrocarbon, a soluble modifying additive of styrenated phenolates of alkali metals. The modifying additive is a mixture of alkyl phenolates of alkali metals and methyl-*tert*-butyl ether at their molar ratio of 1:(0.5-200). Examples of the embodiment of the invention illustrate different content of 1.2-units, in particular, minimal values are 11.2; 11.4; and 12.8%.

However, the use of methyl-*tert*-butyl ether in combination with phenolates of alkali metals does not provide copolymers without block styrene since methyl-*tert*-butyl ether exhibits relatively low electron donor properties compared with chelating EDs comprising two or more heteroatoms. In addition, styrene phenolates of alkali metals are susceptible to metalation by the organometallic compound during the polymerization. These processes cause deactivation of lithium, i.e. "death" of active polymerization centers, which leads to an increased consumption of the organolithium initiator and an increased content of a low-molecular weight fraction in the resulting copolymer. This results in deterioration in the adhesion properties of rubbers based on these copolymers. In addition, this invention provides non-functionalized copolymers that, in rubber, are inferior to functionalized copolymers in such parameters as elastic-hysteresis and physical-mechanical properties.

Thus, there is a need to develop a method for preparing random copolymers with a low content of vinyl groups, which have an improved affinity to silica acid and carbon fillers and the use of which in rubbers would improve their elastic-hysteresis properties.

Description of the invention

It is an object of the present invention to provide random copolymers with a low content of vinyl groups (low vinyl copolymers) which have excellent affinity to silicaand carbon fillers, and rubbers based on them having high elastic-hysteresis properties such as rolling resistance and wet grip.

The preparation of random low vinyl copolymers is achieved by a method of copolymerization of conjugated dienes and vinyl aromatic monomers by using an organolithium initiator, characterized in that the copolymerization is carried out at a temperature of 70 to 130°C in the presence of an electron donor system comprising a potassium alcoholate of the general formula ROK, wherein R is an aliphatic group, and an electron-donor additive, followed by modification of at least one compound selected from the group of cyclosiloxanes, oxocyclosiloxanes, lactams or vinylpyridines.

The resulting modified low vinyl copolymers have random distribution of monomer units in a molecule. The method according to the present invention provides an increased productivity of the process by reducing the time of

polymerization to 30-40 minutes (1.5 to 3 times); makes it possible to simplify the hardware design for continuous polymerization since the polymerization process is completed in 30-40 minutes and there is no need for a large number of reactors. It has been also found that gel formation decreases and, as a consequence, the problems caused by clogging reactors and production unitsare absent.

Copolymers prepared by the method are characterized by a high modification degree, i.e. unreacted modifier in a polymerization product is practically absent, a low content of 1,2-units and a controlled molecular weight distribution.

Rubbers prepared on the basis of these copolymers are characterized by excellent elastic-hysteresis properties - rolling resistance and wet grip.

According to the present invention, the polymerization is carried out using an electron donor system consisting of potassium alcoholate of the general formula ROK, wherein R is an aliphatic group containing 5 to 15 carbon atoms, and an electron donor additive (hereinafter - ED). A molar ratio of the components in the system is ED:ROK = 1:(0.1-10) and depends on target values of the polymer microstructure to be achieved.

Polymerization in the presence of the electron donor system and at a temperature of from 70 to 130°C increases the reactivity of the active sites of polymerizable molecules and, as a consequence, ensures the preparation of copolymers characterized by random distribution of the vinyl units in the macromolecule.

According to the present invention, various aliphatic potassium alcoholates and mixtures thereof can be used. Potassium alcoholate according to the invention is represented by the general formula ROK, wherein R is an aliphatic group containing from 5 to 15 carbon atoms and can be selected from primary, secondary or tertiary aliphatic groups of a linear or branched structure. Preferable potassium alcoholates include potassium amylate, potassium isoamylate, potassium tert-amylate, potassium hexanolate, potassium 2-methylhexanolate, potassium 2-ethylhexanolate, potassium heptanolate, potassium 2-methylheptanolate, potassium 2-ethylheptanolate, potassium octanolate, potassium lapromolates, including polyfunctional mixed potassium lapromolate-tetrahydrofurfurylates containing sodium and elements of group 2 of the Periodic table.

In the method according to the present invention, the amount of potassium alcoholate is calculated based on the active lithium (counterion to the anion in the organometal compound used in the process for preparing an initiator) and, accordingly, the dosage of potassium alcoholate varies depending on the microstructure preferred for the preparation of the copolymer. The higher the amount of alcoholate is, the lower is the content of vinyl aromatic compound residues in the copolymer molecule represented by blocks of different lengths, and the smaller is the length of said blocks.

In the present invention, the amount of used potassium alcoholate is from 0.01 to 0.5 mol per 1 mol of active lithium. The amount of from 0.02 to 0.4 mol per 1 mol of active lithium is preferred. The most preferred amount is from 0.03 to 0.3 mol per 1 mol of active lithium.

The electron-donor additive used in the present invention can be selected from any additives well known and used in polymerization. For example, ED with one, two or more heteroatoms in the structure of the molecule can be used.

Examples of ED with one heteroatom used in the method aretetrahydrofuran (THF), triethylamine, tripropylamine, triisopropylamine, diethyl ether, dipropyl ether, diisopropyl ether or mixtures thereof.

The preferred ED with one heteroatom is tetrahydrofuran (THF).

ED with two or more heteroatoms used in the method of the present invention can be ethylene glycol dimethyl ether (monoglyme), diethylene glycol dimethyl ether (diglyme), 2,2-bis (2'-tetrahydrofuryl)propane (DTHFP), N,N,N',N'-tetramethylethylenediamine (TMEDA), methyl tetrahydrofurfuryl ether, ethyl tetrahydrofurfuryl ether, propyl tetrahydrofurfuryl ether, butyl tetrahydrofurfuryl ether, isopropyl tetrahydrofurfuryl ether, sec-butyl tetrahydrofurfuryl ether, isobutyl tetrahydrofurfuryl ether, tert-butyl tetrahydrofurfuryl ether, pentyl tetrahydrofurfuryl ether, hexyl tetrahydrofurfuryl ether, ethylene glycol methyl tert-butyl ether, ethylene glycol ethyl tert-butyl ether (EGETBE), ditetrahydrofurfuryl ether, diethylene glycol diethyl ether, diethylene glycol dipropyl ether, diethylene glycol diisopropyl ether, diethylene glycol dibutyl ether, diethylene glycol diisobutyl ether or mixtures thereof.

Preferred ED with two or more heteroatoms is ditetrahydrofurfurylpropane (DTHFP), N,N,N',N'-tetramethylethylenediamine (TMEDA), methyl tetrahydrofurfuryl ether, ethylene glycol dimethyl ether, ethylene glycol ethyl tert-butyl ether, ditetrahydrofurfuryl ether.

DTHFP and TMEDA are most preferred as ED with two or more heteroatoms.

The amount of the used ED is calculated based on active lithium, and, accordingly, the ED dosage varies depending on the preferred copolymer microstructure. The greater the amount of used ED, the higher the content of 1,2-units in the copolymer.

ED with one heteroatom provides the claimed technical result with an amount of ED added to active lithium ranging of 0.3 to 2 mol per 1 mol of active lithium. The amount of from 0.4 to 1 mol per 1 mol of active lithium is preferred. The most preferred amount is from 0.5 to 0.8 mol per 1 mol of active lithium.

ED with two or more heteroatoms, in this embodiment, is used in an amount ranging from 0.01 to 0.3 mol per 1 mol of active lithium. The amount of from 0.02 to 0.2 mol per 1 mol of active lithium is preferred. The most preferred amount is from 0.03 to 0.1 mol per 1 mol of active lithium.

The organolithium compounds used as initiators in the method of the present invention can be ethyllithium,

isopropyllithium, n-butyllithium, *sec*-butyllithium, *tert*-butyllithium, phenyllithium, methyllithium, 2-naphthyllithium, 4-phenylbutyllithium, propyllithium, isopropyllithium, 3- dimethylaminopropyllithium, or 3-diethylaminopropyllithium.

N-butyllithium, *sec*-butyllithium, *tert*-butyllithium, and 3-dimethylaminopropyllithium are preferred.

N-butyllithium is most preferred as the organolithium initiator.

The amount of the used organolithium initiator depends on target Mooney viscosity values of the obtained copolymer. On the scale of industrial production, the optimum amount of the organolithium initiator is from 4 to 11 mol per 1 ton of monomers.

According to the present invention, conjugated dienes include 1,3-butadiene, isoprene, 2,3-dimethyl-1,3-butadiene, 1,3-pentadiene (piperylene), 2,3-dimethyl-1,3-butadiene, 3-methyl-1,3-pentadiene, 1,3-hexadiene, 2-methyl-1,3-hexadiene, 1,3-heptadiene, 3-methyl-1,3-heptadiene, 1,3-octadiene, 3-butyl -1,3-octadiene, 3-methyl-1,3-heptadiene, 3,4-dimethyl-1,3-hexadiene, 4,5-diethyl-1,3-octadiene, phenyl-1,3-butadiene, 2,3-diethyl-1,3-butadiene, 2,3-di-n-propyl-1,3-butadiene, 2-methyl-3-isopropyl-1,3-butadiene.

1,3-Butadiene, isoprene, and piperylene are preferred.

1,3-Butadiene is most preferred.

Vinyl aromatic compounds used herein are selected from styrene, α-methylstyrene, divinylbenzene, diisopropenyl benzene, 1-methyl-2-vinylbenzene, 1-methyl-3-vinylbenzene, 1-methyl-4-vinylbenzene, 1,4-dimethyl-3-vinylbenzene, 1,3-dimethyl-5-vinylbenzene, 2-ethyl-2-vinylbenzene, 1-ethyl-3-vinylbenzene, 1-ethyl-4-vinylbenzene, 1-ethyl-4-methyl-3-vinylbenzene, 1,4-diethyl-3-vinylbenzene, and 1-ethyl-3-methyl-4-vinylbenzene.

Styrene, α-methylstyrene, divinylbenzene, and diisopropenyl benzene are preferred vinyl aromatic compounds.

Styrene and α-methylstyrene are the most preferred vinyl aromatic compounds.

The most preferred embodiment of the invention provides butadiene-styrene copolymers.

The present invention provides copolymers with different ratios of diene monomer to vinyl aromatic monomer.

Preferably, the ratio of conjugated diene:vinyl aromatic compound is in the range of (95-60):(5-40) wt. parts, respectively.

The most preferred range of conjugated diene:vinyl aromatic compound is (90-80):(10-20) wt. parts.

Copolymers characterized by an 1,2-unit content of 40% and more are classified as copolymers with a high vinyl content. Copolymers with a low vinyl content are characterized by a ratio of styrene:vinyl units of (13-23):(5-15) and are considered as an alternative to natural rubber for use in truck tire treads, in the manufacture of which the use of high-vinyl copolymers is impossible.

The method of the invention comprises the use of a hydrocarbon solvent. The hydrocarbon solvent used herein can be an aliphatic solvent, including cycloaliphatic solvent, such as pentane, hexane, heptane, cyclohexane, cycloheptane; gasoline fractions or an aromatic solvent, such as benzene, toluene, ethylbenzene; or xylene or a mixture thereof.

It is preferable to use as the hydrocarbon solvent hexanes or a mixture of hexanes with gasoline fractions.

The most preferred hydrocarbon solvent is a mixture of cyclohexane and nefras at a ratio of (65-70):(30-35), wherein nefras is a hexane-heptane fraction of paraffinic hydrocarbons of de-aromatized gasoline of catalytic reforming with a boiling point limit of 65-75°C.

The temperature of polymerization is in the range of 70-130°C.

The preferred temperature of the process is in the range of 80 to 120°C.

The most preferred temperature is in the range of 90 to 110°C.

The polymerization process in the indicated temperature range and in the presence of an electron donor system according to the invention provides copolymers with random structure and a low vinyl content. In addition, the polymerization process by the method according to the invention reduces the energy consumption associated with recovery of recycled solvent (most of the solvent is easily separated from the polymerization product because of a high temperature of the polymerization process).

Post-polymerized modification of the copolymer according to the invention ensures its excellent affinity to silica and carbon fillers.

Compounds selected from the group of cyclosyloxanes, oxocyclosyloxanes, lactams or vinylpyridines are used as terminal modifiers.

Hexamethylcyclotrisiloxane (HMCS), octamethylcyclotetrasiloxane (OMCTS), decamethylpentacyclosiloxane (DMPCS), propyl methacrylate-hepta-butylcyclosiloxane, 1,3-glycidylprop-heptane-isobutyl-cyclosiloxane, 1,1-dimethyl-1-sila-2-oxacyclosiloxane, 2,2,4-trimethyl-1-oxa-4-aza-2-silacyclohexane, N-methyl-epsilon-caprolactam, N-methyl-pyrrolidone, 2-vinylpyridine, 4-vinylpyridine are preferred as terminal modifiers.

The most preferred terminal modifiers are 1,1-dimethyl-1-sila-2-oxocyclosiloxane and 2-vinylpyridine.

The terminal modifier is used in the form of a 1-20% solution in an aliphatic or aromatic solvent. The modifier solution is prepared in advance or directly before use.

Besides terminal modifiers, various branching agents can be used in the claimed method.

Commonly used branching agents include tin(IV) tetrachloride, silicon(IV) tetrachloride, hexachloroparaxylene, hexachlorodisilane, 1,3-bis-trichlorosilanylpropane 1,4-bis-trichlorosilanylbutane, bis-trichlorosilanylethane, and trichlorosilylbenzene.

Tin(IV) tetrachloride, silicon(IV) tetrachloride, hexachloroparaxylene, hexachlorodisilane and bis-trichlorosilanylethane are preferred.

The most preferred branching agents are tin(IV) tetrachloride and silicon(IV) tetrachloride.

The branching agent is used in the form of a 1-20% solution in an aliphatic or aromatic solvent. The branching agent solution is prepared in advance or directly before use.

Solutions of the modifying and (if necessary) branching agents are added to the polymerization product after the monomer conversion has reached 95 to 100%. The agents are loaded continuously or in batchwise manner for 10-20 minutes under constant stirring.

The polymerization process is carried out continuously or in a batchwise manner in one or more reactors.

Continuous copolymerization process is carried out in a battery of two or more metal reactors. Continuous copolymerization process is preferably carried out in battery of 3 to 6 metal reactors. Batchwise process is carried out in one or more non-interconnected metal reactors. All reactors are equipped with mixers, jacket to supply/remove heat, and fittings for loading raw materials and unloading reaction products. The polymerization process also can be carried out in a single reactor, followed by dividing the resulting polymerization product into two streams, one of which is fed with a branching agent and the other is fed with a modifying agent to prepare a simultaneously branched and modified copolymer.

At the beginning of the process, a reactor is charged with the total calculated amount of conjugated diene, the total calculated amount of a vinyl aromatic monomer and the total volume of a hydrocarbon solvent, and the mixtureis heated to a required temperature. After feeding and heating of the mixture, the reactor is fed with components of the catalyst system, wherein potassium alcoholate and ED are loaded first together or separately in any order. Then, an organolithium initiator is fed, and the polymerization process is carried out until reaching a monomer conversion of 95% or more. At the beginning of the process, the temperature of the reaction mixture is 50 to 60°C. As the copolymerization reaction proceeds, the temperature of the reaction mixture increases to 70-130°C due to self-heating of the medium, and if the temperature exceeds or does not reach this range, it is maintained at the indicated level by the reactor thermal control system.

When monomer conversion reaches the value of at least 95%, a terminal modifier and, if necessary, a branching agent are supplied to the polymerization product. The branching and modification processes are carried out in the same mode - for 10-20 minutes under continuous stirring. Then, after this time, the polymerization product is stabilized with an antioxidant, preferably a phenolic or amine antioxidant in an amount of 0.2-0.7 wt.%, most preferably 0.3 to 0.6 wt.%. Further, polymerization product is delivered to degassing, and then dried to moisture content of not more than 0.8 wt.%.

The resulting copolymers are characterized by a 1,2-unit content of 8 to 12 wt.%, a molecular weight distribution of 1.12 to 1.85, and a Mooney viscosity of 66 to 76 MU (Moony Units).

The present invention also relates to rubber mixtures based on copolymers prepared by the claimed method.

Rubber mixtures are prepared according to standard formulations that comprise, in addition to the copolymer, other additives well known to those skilled in the art, such as, for example, fillers, activators and vulcanization accelerators, curing agents, various softeners and other processing additives. The total content of additives is 40 to 100 parts per 100 parts of copolymer.

It is possible to use as a filler, for example, carbon black, silicon oxides, titanium, zinc and the like.

For example, lead, zinc, magnesium, acetanilide, stearic acid, sulfenamides, diphenylguanidine and the like are suitable as an activator and a vulcanization accelerator.

Compounds, such as, for example, sulfur, organic peroxides and polyhalogenated alkylphenol-formaldehyde resins, oligoether acrylates and other unsaturated compounds can be used as vulcanizing agents.

Naphthenic oils, stearic and oleic acids, paraffins, rosins and the like can be used as softeners and processing additives.

Rubber mixtures prepared on the basis of the above copolymers are characterized by high wear resistance and a high wet grip.

The rubber mixtures according to the invention can be prepared, in particular, in the formulation according to GOST R 54555-2011 (Table 1). The resulting rubber mixtures fully comply with the technical requirements for the product, in particular, the generally available standard ASTM D 3185-07.

Table 1

| Formulation of rubber compounds | | |
|---|---|---|
| Name | Weight part in the formulation, g | |
| | 1A | 2A |
| Rubber | 100.00 | 100.00 |

(continued)

| Formulation of rubber compounds | | |
|---|---|---|
| Name | Weight part in the formulation, g | |
| | 1A | 2A |
| Zinc oxide | 3.0 | 3.0 |
| Sulfur | 1.75 | 1.75 |
| Stearic acid | 1.00 | 1.00 |
| Oil furnace carbon black | 50.00 | 35.00 |
| TBBS (N-*tert*-butyl-2-benzothiazolesulfenamide) | 1.00 | 1.00 |
| Total | 156.75 | 141.75 |
| Load factor for rolling mill | 3.0 | 3.3 |
| Load factor for an internal mixer<br>- cam-type<br>- banbury type | <br>0.47<br>0.49 | <br>0.49<br>0.46 |

When mixtures are prepared in a rolling miller, rubber and carbon black are weighed with an accuracy of 1.0 g, sulfur and a vulcanization accelerator - with an accuracy of 0.02 g, and other ingredients - with an accuracy of 0.1 g.

When mixtures are prepared in an internal mixer, rubber and =carbon black are weighed with an accuracy of 0.1 g, a mixture of ingredients - with an accuracy of 0.01 g, and separately added ingredients, if any, with an accuracy of 0.001 g.

Embodiments of the invention

Embodiments of the present invention are disclosed below. A person skilled in the art will appreciate that the invention is not limited to the presented examples only, and the same effect can be achieved in other embodiments without exceeding the object of the claimed invention.

The test methods used to evaluate the properties of the copolymers prepared by the claimed method:

1) Mooney viscosity of rubbers at 100°C (ML(1+4)100°C) was determined according to ASTM D 1646-07 on a MV 2000 Mooney viscometer.

2) Molecular mass characteristics of rubbers were determined by gel permeation chromatography according to the internal procedure. The measurements were carried out using a gel chromatograph Waters Breeze with a refractometer. Test conditions: a bank of 4 high-resolution columns (300 mm long, 7.8 mm in diameter) filled with Styragel (HR3, HR4, HR5, HR6), which allows analysis of polymers with a molecular weight of 500 to $1*10^7$ a.m.u.; solvent - tetrahydrofuran, flow rate - 1 $cm^3$/min; temperature of thermostat columns and refractometer - 30°C; calculation - universal calibration with polystyrene standards using the Kuhn-Mark-Houwink constants (for butadiene-styrene copolymers K = 0.00041, $\alpha$ = 0.693). Rubber samples were dissolved in freshly distilled tetrahydrofuran, the weight concentration of polymer in the solution was 2 mg/ml.

3) The weight ratio of bound styrene and 1,2-units in samples of butadiene-styrene copolymers were determined by Fourier transform IR spectroscopy in accordance with the specifications TU 38.40387-2007 (cl.5.8). The method is based on measuring the intensity of absorption band at 700 $cm^{-1}$ corresponding to CH vibrations in the benzene ring of styrene, and absorption band at 910 $cm^{-1}$ corresponding to vibrations of 1,2-polybutadiene units. The IR spectrometer was calibrated using a set of standard samples of the composition and microstructure of random butadiene-styrene rubber with known weight ratios of bound styrene and 1,2-units in the butadiene part of the chain, determined by NMR spectroscopy.

4) The determination of the content of a residual modifier in polymer is based on preliminary extraction of the modifier with ethyl alcohol, followed by chromatography-flame ionization detector analysis. The residual modifier was calculated using the internal standard method.

5) The degree of modification of polymer was calculated by the formula:

$$X,\% = (w_i, g - w_r, g) * 100\%/w_i, g,$$

where X is the degree of modification
$w_i$ is the weight of an introduced modifier
$w_r$ is the weight of a residual modifier

5) The content of active lithium in solutions of lithium catalysts was determined by a method based on direct titration of active lithium with a solution of isopropyl alcohol in xylene in the presence of o-phenanthroline that generates a red-orange complex with organolithium compounds.

6) Performance properties of rubber compounds, such as rolling resistance (tan δ at 60°C), were evaluated on a rubber process analyzer (RPA-2000 - Alpha Technologies): frequency - 10 Hz, shift amplitude - 10%, temperature - 60°C.

The essence of the proposed technical solution is illustrated by the following examples of specific embodiments, which illustrate, without any limitation, the scope of the invention. A person skilled in the art will appreciate that the invention is not limited to them, and the same effect can be achieved by applying equivalent formulas.

EXAMPLE 1. According to the prototype

2800 g of a mixture of cyclohexane with nefras (n-hexane fraction from petroleum), 80 g of styrene, 360 g of butadiene, 7 mmol of 1M solution of methyl *tert*-butyl ether in cyclohexane/nefras (ED/BuLi molar ratio of 1.9), 3.6 mmol of 0.5M solution of n-butyllithium in cyclohexane/nefras (initiator dosage per 1 kg of monomers, 8.2 mmol) and 0.14 mmol a 0.05M solution of a potassium derivative of a mixture of mono-, di-, tri-(-methylbenzyl) phenols in cyclohexane/nefras (molar ratio of the potassium phenolate mixture to butyl lithium of 0.04 based on potassium) were loaded to a reactor under a nitrogen atmosphere. The reaction mass was heated to 75°C under stirring and aged for 1.5 hours.

After the polymerization was complete, an antioxidant (4% methyl-2,6-di-*tert*butylphenol (ionol)) was added to the polymer in an amount of 0.6%, and the polymer was separated by steam stripping of the solvent. The wet crumb was dried in an air dryer at 90°C. The polymer yield was 440 g (100%).

EXAMPLE 2. According to the Invention

The process of copolymerization of butadiene with styrene was carried out in a 10-liter metal reactor equipped with mixers, jacket to supply/remove heat, and fittings for loading raw materials and unloading finished products.

The copolymer was prepared by filling the reactor with a previously prepared butadiene-styrene charge consisting of 1,3-butadiene and styrene, and the total amount of a hydrocarbon solvent. The solvent used is a mixture of nefras and cyclohexane at a ratio of 70:30. The butadiene/styrene weight ratio in the charge was 82:18, respectively. After feeding the charge, the reaction mass was heated to 90°C, and the components of the catalytic system consisting of an organolithium initiator and an electron donor system (potassium alcoholate and ED) were fed to the reaction. The organolithium initiator was n-BuLi, and the calculated amount of n-BuLi was 9.2 mmol per kg of monomers. Potassium alcoholate was potassium *tert*-amylate with a molar ratio of potassium alcoholate to n-BuLi of 0.05. The ED was TMEDA with a molar ratio of ED to n-BuLi of 0.05. The terminal modifier was 2-vinylpyridine in a molar ratio of 2-vinylpyridine to n-BuLi of 5. The modification was carried out for 15 minutes. After the modification, a branching agent was fed to the reactor, wherein the branching agent was tin tetrachloride in a molar ratio of tin tetrachloride to butyllithium of 0.25, and after 15 minutes of the reaction, an antioxidant was introduced in an amount of 0.6% based on the polymer, after that the polymer was separated by water degassing. The characteristics of the prepared polymer and rubber compounds based on the polymer are shown in Table 3.

EXAMPLE 3

The copolymerization process was carried out similarly to Example 2, with a difference that the used ED was triethylamine (TEA).

Modification and branching to obtain modified and branched polymers, relatively, were carried out in different reactors, followed by mixing of linear and branched polymers in a separate apparatus (an averager) equipped with a highly efficient mixer.

EXAMPLE 4

The copolymerization process was carried out similarly to Example 2 with a difference that N,N-dimethyltetrahydrofurfurylamine (DMTA) was used as ED. The vinylaromatic compound was α-methylstyrene. Potassium alcoholate was potassium heptanolate, and 4-vinylpyridine was used as the terminal modifier.

EXAMPLE 5

The copolymerization process was carried out similarly to Example 2, with a difference that *sec*-butyl lithium was used as the organolithium initiator. Sodium-potassium lapramolate (K/Na molar ratio = 2) was used as the alcoholate. N-methylpyrrolidone (NMP) was used as the terminal modifier, and the branching agent used was silicon tetrachloride.

Modification and branching to obtain modified and branched polymers, relatively, were carried out in different reactors, followed by mixing of linear and branched polymers in a separate apparatus (an averager) equipped with a highly efficient mixer.

EXAMPLE 6

The copolymerization process was carried out similarly to Example 2, with a difference that potassium alcoholate was potassium *tert*-butylate, and DMTA was used as ED. The terminal modifier was octamethylcyclotetrasiloxane (OMCTS), and silicon tetrachloride was used as the branching agent.

EXAMPLE 7

The copolymerization process was carried out similarly to Example 2, with a difference that conjugated diene was isoprene. ED was methyl *tert*-butyl ether (MTBE), and the terminal modifier was OMCTS. The method for preparing polymer was carried out without a branching agent.

EXAMPLE 8

The copolymerization process was carried out similarly to Example 2. TEA was used as the ED, 1,1-dimethyl-1-sila-2-oxocyclohexane (DSO) was used as the terminal modifier.

EXAMPLE 9

The copolymerization process was carried out similarly to Example 2. Conjugated diene was isoprene, TEA was used as ED, and potassium alcoholate was potassium hexanolate. Modification and branching to obtain modified and branched polymers, relatively, were carried out in different reactors, followed by mixing of linear and branched polymers in a separate apparatus (an averager).

EXAMPLE 10

The copolymerization process was carried out similarly to Example 2. Conjugated diene was isoprene, MTBE was used as ED, as potassium alcoholate potassium-sodium lapromolate (K/Na molar ratio = 2) was used. OMCTS was used as the terminal modifier. The branching agent was silicon tetrachloride.

EXAMPLE 11

The copolymerization process is carried out similarly to Example 2. Conjugated diene was isoprene, THF was used as ED, and as potassium alcoholate potassium-sodium lapromolate (K/Na molar ratio = 2) was used. NMP was used as the terminal modifier. The branching agent was silicon tetrachloride. Modification and branching to obtain modified and branched polymers, relatively, were carried out in different reactors, followed by mixing of linear and branched polymers in a separate apparatus (an averager).

EXAMPLE 12

The copolymerization process was carried out similarly to Example 2. ED was diglyme, and potassium alcoholate was potassium heptanolate. 4-Vinylpyridine was used as the terminal modifier.

EXAMPLE 13

The copolymerization process was carried out similarly to Example 2. ED was MTBE, and potassium alcoholate was potassium *tert*-butylate.

EXAMPLE 14

The copolymerization process was carried out similarly to Example 2. Conjugated diene was isoprene, TEA was used as ED, and potassium alcoholate was potassium *tert*-butylate. Silicon tetrachloride was used to branch the polymer. OMCTS was used as the terminal modifier.

EXAMPLE 15

The copolymerization process was carried out similarly to Example 2. The vinyl aromatic compound was $\alpha$-methylstyrene, and diglyme was used as ED. The terminal modification of the copolymer was carried out using OMCTS, and branching was performed with silicon tetrachloride. Modification and branching to obtain modified and branched polymers, relatively, were carried out in different reactors, followed by mixing of linear and branched polymers in a separate apparatus (an averager).

EXAMPLE 16

The copolymerization process was carried out similarly to Example 2. 2,2-Bis(2'-tetrahydrofuryl)propane (DTHFP) was used as ED, as potassium alcoholate potassium-sodium lapromolate (K/Na molar ratio = 2) was used.

EXAMPLE 17

The copolymerization process was carried out similarly to Example 2. Conjugated diene was 1,3-hexadiene, MTBE was used as ED, and potassium alcoholate was potassium hexanolate. The terminal modification was carried out using OMCTS, and branching was performed with silicon tetrachloride.

EXAMPLE 18

The copolymerization process was carried out similarly to Example 2. ED was THF, and 4-vinylpyridine was used as the terminal modifier. Modification and branching to obtain a modified and branched polymer were carried out in different reactors, followed by mixing of linear and branched polymers in a separate apparatus (an averager).

EXAMPLE 19

The copolymerization process was carried out similarly to Example 2. The initiator was sec-butyl lithium, and diglyme was used as ED. Potassium alcoholate was potassium heptanolate. Terminal modification was carried out using NMP, and branching was performed with silicon tetrachloride.

EXAMPLE 20

The copolymerization process was carried out similarly to Example 2. MTBE was used as ED. Potassium alcoholate was potassium heptanolate. Terminal modification was carried out using NMP, and branching was performed with silicon tetrachloride. Modification and branching to obtain modified and branched polymers, relatively, were carried out in different reactors, followed by mixing of linear and branched polymers in a separate apparatus (an averager).

EXAMPLE 21

The copolymerization process was carried out similarly to Example 2, with a difference that conjugated diene was isoprene, and potassium alcoholate was potassium butylate. Branching and terminal modification were not carried out in this case. The resulting rubber was inferior in the elastic-hysteresis properties to the modified rubber samples.

The process parameters and the formulations of copolymers prepared by the method described in the examples are given in Table 2. The dosages are indicated per substance, the value is dimensionless.

<u>Example of preparation of rubber mixtures</u>

Rubber mixtures were prepared by vulcanizing polymer compositions. The choice of polymer and the component composition of a rubber mixture were determined by the purpose, operating conditions and technical requirements for the product, production process and other aspects.

The process of preparing rubbers comprises mixing rubber with ingredients in special mixers or rolling mills,

shearing and cutting semi-finished products made of rubber (shapes and sizes depended on the planned further use of the resulting rubber, in particular, from the planned test method), and vulcanizing the semi-finished products in special devices(presses, autoclaves, vulcanizer formers and others).

In the context of the present invention, rubber mixtures were prepared according to the formulation as given in Table 1. The preparation of the rubber compounds was carried out in a small internal mixer with Banbury-type rotors. After each mixing step, the rubber mixtures were treated on rolling mills according to ASTM D 3182 at mill temperature of 50±5°C.

The parameters and dosages of the process for preparing copolymers described in the examples are given in Table 2. The dosages are indicated for active lithium, the values are dimensionless.

Table 2

Process parameters and formulation of copolymers

| Formulation of polymer | Example No. | | | | | | |
|---|---|---|---|---|---|---|---|
| | 1 (prototype) | 2 | 3 | 4 | 5 | 6 | 7 |
| Temperature range, °C | 70-80 | 95-100 | 100-110 | 70-78 | 90-95 | 100-110 | 95-100 |
| Monomers | Butadiene: styrene | Butadiene: styrene | Butadiene: styrene | Butadiene: α-methylstyrene | Butadiene: styrene | Butadiene: styrene | Isoprene: styrene |
| Conjudated diene:vinyl aromatic ratio in charge | 82:18 | 82:18 | 82:18 | 82:18 | 82:18 | 82:18 | 82:20 |
| Initiator | n-BuLi | n-BuLi | n-BuLi | n-BuLi | *sec*-BuLi | n-BuLi | n-BuLi |
| Dosage of initiator per 1 kg monomers, mmol | 8.2 | 9.2 | 10.7 | 8.9 | 9.7 | 9.4 | 8.4 |
| Electron-donor | MTBE | TMEDA | TEA | DMTA | TMEDA | DMTA | MTBE |

| | | | | | | | |
|---|---|---|---|---|---|---|---|
| additive (ED) | | | | | | | |
| ED dosage | 1.9 | 0.05 | 0.05 | 0.03 | 0.05 | 0.03 | 0.05 |
| Potassium alcoholate | Mixture of potassium mono-, d-, tri-(α-methylbenzyl) phenolate | Potassium *tert*-amylate | Potassium *tert*-amylate | Potassium heptanolate | Potassium-sodium lapromolate | Potassium *tert*-butylate | Potassium *tert*-amylate |
| Dosage of potassium alcoholate | 0.04 | 0.05 | 0.05 | 0.03 | 0.05 | 0.03 | 0.05 |
| Modifying agent (MA) | - | 2-vinylpyridine | 2-vinylpyridine | 4-vinylpyridine | NMP | OMCTS | OMCTS |
| MA dosage | - | 5 | 5 | 5 | 0.9 | 0.9 | 0.9 |
| Branching agent (BA) | - | $SnCl_4$ | $SnCl_4$ | $SnCl_4$ | $SnCl_4$ | $SnCl_4$ | - |
| BA dosage | - | 0.25 | 0.25 | 0.25 | 0.25 | 0.25 | - |

| Formulation of polymer | Example No. | | | | | | |
|---|---|---|---|---|---|---|---|
| | 8 | 9 | 10 | 11 | 12 | 13 | 14 |
| Temperature range, °C | 105-110 | 110-115 | 95-100 | 105-110 | 90-95 | 100-105 | 105-110 |
| Monomers | Butadiene: styrene | Isoprene: styrene | Butadiene: styrene | Butadiene: styrene | Butadiene: styrene | Butadiene: styrene | Isoprene: styrene |
| Conjudated diene:vinyl aromatic ratio in charge | 82:18 | 75:25 | 82:18 | 80:20 | 82:18 | 82:18 | 75:25 |
| Initiator | n-BuLi | n-BuLi | n-BuLi | n-BuLi | *sec*-BuLi | n-BuLi | n-BuLi |
| Dosage of initiator per 1 kg monomers, mmol | 10.9 | 11.2 | 9.4 | 9.3 | 10 | 9.1 | 8.9 |
| Electron-donor additive | TEA | TEA | MTBE | THF | diglyme | MTBE | TEA |

| | | | | | | | |
|---|---|---|---|---|---|---|---|
| (ED) | | | | | | | |
| ED dosage | 0.5 | 0.5 | 0.3 | 0.3 | 0.03 | 0.3 | 0.5 |
| Potassium alcoholate | Potassium *tert*-amylate | Potassium hexanolate | Potassium-sodium lapromolate | Potassium-sodium lapromolate | Potassium-heptanolate | Potassium *tert*-butylate | Potassium *tert*-butylate |
| Dosage of potassium alcoholate | 0.03 | 0.03 | 0.03 | 0.03 | 0.03 | 0.03 | 0.03 |
| Modifying agent (MA) | DSO | 2-vinylpyridine | OMCTS | NMP | 4-vinylpyridine | 2-vinylpyridine | OMCTS |
| MA dosage | 0.9 | 0.9 | 0.9 | 0.9 | 5 | 5 | 0.9 |
| Branching agent (BA) | $SnCl_4$ | $SnCl_4$ | $SiCl_4$ | $SiCl_4$ | $SnCl_4$ | $SnCl_4$ | $SiCl_4$ |
| BA dosage | 0.25 | 0.25 | 0.25 | 0.25 | 0.25 | 0.25 | 0.25 |

| Formulation of polymer | Example No. | | | | | | |
|---|---|---|---|---|---|---|---|
| | 15 | 16 | 17 | 18 | 19 | 20 | 21 |
| Temperature range, °C | 105-110 | 95-100 | 90-95 | 120-130 | 100-105 | 105-110 | 105-110 |
| Monomers | Butadiene: α-methylstyrene | Isoprene: styrene | 1,3-hexadiene: styrene | Butadiene: styrene | Butadiene: styrene | Butadiene: α-methylstyrene | Isoprene: styrene |
| Conjudated diene:vinyl aromatic ratio in charge | 82:18 | 82:20 | 82:18 | 80:18 | 75:25 | 82:18 | 82:18 |
| Initiator | n-BuLi | n-BuLi | n-BuLi | n-BuLi | *sec*-BuLi | n-BuLi | n-BuLi |
| Dosage of initiator per 1 kg monomers, mmol | 10.0 | 9.4 | 9.8 | 10.2 | 9.1 | 9.6 | 9.7 |
| Electron-donor | Diglyme | DTHFP | MTBE | THF | Diglyme | MTBE | TMEDA |

| | | | | | | | |
|---|---|---|---|---|---|---|---|
| additive (ED) | | | | | | | |
| ED dosage | 0.05 | 0.03 | 0.3 | 0.3 | 0.05 | 0.3 | 0.03 |
| Potassium alcoholate | Potassium *tert*-amylate | Potassium-sodium lapromolate | Potassium-hexanolate | Potassium-tret-amylate | Potassium-heptanolate | Potassium *tert*-butylate | Potassium *tert*-butylate |
| Dosage of potassium alcoholate | 0.9 | 5 | 0.9 | 5 | 0.9 | 0.9 | 5 |
| Modifying agent (MA) | DSO | 2-vinylpyridine | OMCTS | NMP | 4-vinylpyridine | 2-vinylpyridine | OMCTS |
| MA dosage | 0.9 | 0.9 | 0.9 | 0.9 | 5 | 5 | 0.9 |
| Branching agent (BA) | $SiCl_4$ | $SnCl_4$ | $SiCl_4$ | $SnCl_4$ | $SiCl_4$ | S-$Cl_4$ | - |
| BA dosage | 0.25 | 0.25 | 0.25 | 0.25 | 0.25 | 0.25 | - |

List of abbreviations:

TMEDA - N,N,N'N'-tetramethylethylenediamine
TEA - triethylamine
DMTA - N,N-dimethyl-tetrahydrofurfurylamine
MTBE - methyl-*tert*-butyl ether
Diglyme - diethylene glycol dimethyl ether
THF - tetrahydrofuran
DTHFP - 2,2-bis(2'-tetrahydrofurfuryl)propane
n-BuLi - normal butyllithium
*sec*-BuLi - *sec*-betyllithium
OMCTS - Octamethylcyclotetrasiloxane
$SnCl_4$ - tin tetrachloride
$SiCl_4$ - silicon tetrachloride
NMP - N-methylpyrrolidone
DSO - 1,1-dimethyl-1-sila-2-oxocyclohexane

Table 3

| Properties of copolymers and rubbers based on copolymers | | | | | | | | | | |
|---|---|---|---|---|---|---|---|---|---|---|
| Characteristic parameters | Example No. | | | | | | | | | |
| | 1 | 2 | 3 | 4 | 5 | 6 | 7 | 8 | 9 | 10 |
| Copolymer | | | | | | | | | | |
| Content of 1,2-units, wt.% | 11 | 11 | 10 | 8 | 10 | 9 | 11 | 12 | 12 | 11 |
| Content of bound styrene, wt.% | 18 | 18 | 18 | 17 | 18 | 18 | 20 | 17 | 24 | 18 |
| MA conversion, wt.% | - | 99 | 98 | 99 | 97 | 99 | 96 | 98 | 95 | 99 |
| $M_n \cdot 10^{-3}$ a.m.u. | - | 119 | 124 | 100 | 104 | 110 | 85 | 120 | 107 | 111 |
| $M_w \cdot 10^{-3}$ a.m.u. | - | 174 | 193 | 153 | 157 | 169 | 95 | 186 | 168 | 174 |
| Polydispersity, $M_w/M_n$ | - | 1.46 | 1.55 | 1.53 | 1.85 | 1.53 | 1.12 | 1.55 | 1.57 | 1.56 |
| Mooney viscosity, Mooney Units | 51 | 75 | 77 | 67 | 67 | 72 | 70 | 73 | 70 | 75 |
| Rubbers | | | | | | | | | | |
| Rolling resistance, tg δ at +60° | 0.253 | 0.171 | 0.202 | 0.179 | 0.174 | 0.181 | 0.207 | 0.208 | 0.198 | 0.200 |
| Wet grip, tg δ at 0° | 0.161 | 0.211 | 0.184 | 0.200 | 0.209 | 0.186 | 0.180 | 0.178 | 0.182 | 0.179 |

| Characteristic parameters | Example No. | | | | | | | | | | |
|---|---|---|---|---|---|---|---|---|---|---|---|
| | 11 | 12 | 13 | 14 | 15 | 16 | 17 | 18 | 19 | 20 | 21 |
| Copolymer | | | | | | | | | | | |
| Content of 1,2-units, wt.% | 12 | 10 | 12 | 11 | 12 | 10 | 11 | 9 | 8 | 10 | 11 |
| Content of bound styrene, wt.% | 19 | 18 | 18 | 23 | 17 | 19 | 18 | 18 | 25 | 18 | 18 |
| MA conversion, wt.% | 97 | 99 | 98 | 97 | 98 | 99 | 97 | 96 | 98 | 99 | 96 |
| $M_n \cdot 10^{-3}$ a.m.u. | 105 | 120 | 108 | 101 | 121 | 111 | 124 | 104 | 104 | 116 | 91 |
| $M_w \cdot 10^{-3}$ a.m.u. | 171 | 176 | 169 | 159 | 195 | 171 | 190 | 172 | 153 | 175 | 103 |
| Polydispersity, $M_w/M_n$ | 1.62 | 1.46 | 1.56 | 1.57 | 1.61 | 1.54 | 1.53 | 1.65 | 1.47 | 1.5 | 1.13 |
| Mooney viscosity, Mooney Units | 73 | 75 | 70 | 68 | 76 | 73 | 77 | 71 | 66 | 74 | 71 |
| Rubbers | | | | | | | | | | | |
| Rolling resistance, tg δ at +60° | 0.194 | 0.178 | 0.196 | 0.206 | 0.183 | 0.174 | 0.201 | 0.200 | 0.179 | 0.196 | 0.243 |

(continued)

| Rubbers | | | | | | | | | | | |
|---|---|---|---|---|---|---|---|---|---|---|---|
| Wet grip, tg δ at 0° | 0.187 | 0.198 | 0.183 | 0.176 | 0.193 | 0.201 | 0.179 | 0.178 | 0.196 | 0.184 | 0.168 |

Comparing the data presented in Tables 2 and 3, it is obvious that the method according to the invention provides low vinyl copolymers having a statistical distribution of monomer units in the molecule, controlled by the molecular weight distribution and Mooney viscosity.

In addition, the modified copolymers prepared by the method according to the invention have excellent affinity to carbon black, which, when processed in rubbers, provides them with high elastic-hysteresis properties. This is confirmed with the values of tan $\delta$ at +60° (rolling resistance) and tan $\delta$ at 0° (wet grip). These indicators are extremely important because they directly affect the quality of car tires produced from these copolymers, ensuring their safety, improved handling of the vehicle and reducing fuel consumption.

## Claims

1. A method for preparing random copolymers with a low content of vinyl groups by copolymerization of conjugated dienes and vinyl aromatic monomers by using an organolithium initiator, **characterized in that** the copolymerization is carried out at a temperature of 70 to 130°C in the presence of an electron donor system comprising a potassium alcoholate of the general formula ROK, wherein R is an aliphatic group comprising 5 to 15 carbon atoms, and an electron-donor (ED) additive, followed by modification with at least one compound selected from the group of cyclosiloxanes, oxocyclosiloxanes, lactams or vinyl pyridines.

2. The method of claim 1, **characterized in that** the copolymerization is carried out at a temperature of 80 to 120°C, preferably the copolymerization is carried out at a temperature of 90 to 110°C.

3. The method of claim 1, **characterized in that** a molar ratio of the components in the electron donor system ED/ROK is in the range of (0.1-10).

4. The method of claim 1, **characterized in that** the potassium alcoholate is selected from the group including potassium amylate, potassium isoamylate, potassium tert-amylate, potassium hexanolate, potassium 2-methylhexanolate, potassium 2-ethylhexanolate, potassium heptanolate, potassium 2-methylheptanolate, potassium 2-ethylheptanolate, potassium octanolate, potassium lapromolates, including polyfunctional mixed potassium 1apromolate-tetrahydrofurfurylates containing sodium and elements of group 2, or a mixture thereof.

5. The method of claim 1, **characterized in that** a compound with one heteroatom is used as the ED, preferably the ED with one heteroatom is selected from the group including tetrahydrofuran (THF), triethylamine, tripropylamine, triisopropylamine, diethyl ether, dipropyl ether, di-isopropyl ether, or a mixture thereof, most preferably the ED is tetrahydrofuran (THF).

6. The method of claim 5, **characterized in that** the amount of the ED is 0.3 to 2 mol per 1 mol of active lithium of the organolithium initiator, preferably the amount of the ED is 0.4 to 1 mol per 1 mol of active lithium of the organolithium initiator, more preferably the amount of the ED is 0.5 to 0.8 mol per 1 mol of active lithium of the organolithium initiator.

7. The method of claim 1, **characterized in that** a compound with two and more heteroatoms is used as the ED, preferably the ED with two or more heteroatoms is selected from the group including ethylene glycol dimethyl ether (monoglyme), diethylene glycol dimethyl ether (diglyme), 2,2-bis(2'-tetrahydrofuryl)propane (DTHFP), N,N,N',N'-tetramethylethylenediamine (TMEDA), methyl tetrahydrofurfuryl ether, ethyl tetrahydrofurfuryl ether, propyl tetrahydrofurfuryl ether, butyl tetrahydrofurfuryl ether, isopropyl tetrahydrofurfuryl ether, *sec*-butyl tetrahydrofurfuryl ether, isobutyl tetrahydrofurfuryl ether, *tert*-butyl tetrahydrofurfuryl ether, pentyl tetrahydrofurfuryl ether hexyl tetrahydrofurfuryl ether, ethylene glycol methyl *tert*-butyl ether, ethylene glycol ethyl *tert*-butyl (EGETBE), ditetrahydrofurfuryl ether, diethylene glycol diethyl ether, diethylene glycol dipropyl ether, diethylene glycol diisopropyl ether, diethylene glycol dibutyl ether, diethylene glycol diisobutyl ether, or mixtures thereof, more preferably the ED with two or more heteroatoms is selected from the group including 2,2-bis(2'-tetrahydrofuryl)propane (DTHFP), N,N,N',N'-tetramethylethylenediamine (TMEDA), methyltetrahydrofurfuryl ether, ethylene glycol dimethyl ether, ethylene glycol ethyl *tert*-butyl ether, and ditetrahydrofurfuryl ather, most preferably the ED with two or more heteroatoms is selected from DTHFP and TMEDA.

8. The method of claim 7, **characterized in that** the amount of the ED with two or more heteroatoms is 0.01 to 0.3 mol per 1 mol of active lithium of the organolithium initiator, preferably the amount of the ED with two or more heteroatoms is 0.02 to 0.2 mol per 1 mol of active lithium of the organolithium initiator, most preferably the amount of the ED with two or more heteroatoms is 0.03 to 0.1 mol per 1 mol of active lithium of the organolithium initiator.

9. The method of claim 1, **characterized in that** the compounds used as terminal modifiers are selected from the group including hexamethylcyclotrisiloxane (HMCTS), octamethylcyclotetrasiloxane (OMCTS), decamethylpentacyclosiloxane (DMPCS), propylmethacrylate-hepta-butylcyclosiloxane, 1,3-glycidylprop-heptane-isobutyl-cyclosiloxane, 1,1-dimethyl-1-sila-2-oxacyclosiloxane, 2,2,4-trimethyl-1-oxa-4-aza-2-silacyclohexane, N-methyl-epsilon-caprolactam, N-methyl-pyrrolidone, 2-vinylpyridine, 4-vinylpyridine, preferably the terminal modifier is selected from octamethylcyclotetrasiloxane, 1,1-dimethyl-1-sila-2-oxacyclosiloxane, and 2-vinylpyridine.

10. The method of claim 9, **characterized in that** the terminal modifier is used in the form of a 1-20% solution in an aliphatic or aromatic solvent.

11. The method of claim 10, **characterized in that** the modifier solution is prepared in advance or directly before use.

12. The method of claim 1, **characterized in that** branching agents are further used.

13. The method of claim 12, **characterized in that** the branching agent is selected from the group, including tin tetrachloride, silicon tetrachloride, hexachloroparaxylene, hexachlorodisilane, 1,3-bis-trichlorosilanylpropane, 1,4-bis-trichlorosilanylbutane, bis-trichlorosilanylethane, and trichlorosilylbenzene, preferably the branching agent is selected from tin tetrachloride, silicon tetrachloride, hexachloroparaxylene, hexachlorodisilane, and trichlorosilanylethane, more preferably the branching agent is selected from tin tetrachloride and silicon tetrachloride.

14. Copolymers with a low content of vinyl groups prepared by a method according to any one of claims 1 to 13.

15. The copolymers of claim 14, **characterized by** a 1,2-unit content of 8 to 12 wt.%, a molecular weight distribution of 1.12 to 1.85, and Mooney viscosity of 66 to 76 Moony units.

16. Rubber mixtures comprising a copolymer according to claims 14-15 or a copolymer prepared by a method according to any one of claims 1 to 13, and appropriate additives.

## Patentansprüche

1. Verfahren zur Herstellung von Random-Copolymeren mit niedrigem Gehalt an Vinylgruppen durch Copolymerisation von konjugierten Dienen und vinylaromatischen Monomeren unter Verwendung eines Organolithium-Initiators, **dadurch gekennzeichnet, dass** die Copolymerisation bei einer Temperatur von 70 bis 130°C in Gegenwart eines Elektronendonorsystems durchgeführt wird, umfassend ein Kaliumalkoholat der allgemeinen Formel ROK, in der R eine aliphatische Gruppe mit 5 bis 15 Kohlenstoffatomen ist, und eines Elektronendonor-(ED)-Additivs, gefolgt von einer Modifikation mit mindestens einer Verbindung, ausgewählt aus der Gruppe der Cyclosiloxane, Oxocyclosiloxane, Lactame oder Vinylpyridine.

2. Verfahren nach Anspruch 1, **dadurch gekennzeichnet, dass** die Copolymerisation bei einer Temperatur von 80 bis 120°C, vorzugsweise bei einer Temperatur von 90 bis 110°C, durchgeführt wird.

3. Verfahren nach Anspruch 1, **dadurch gekennzeichnet, dass** das Molverhältnis der Komponenten im Elektronendonorsystem ED/ROK im Bereich von (0,1-10) liegt.

4. Verfahren nach Anspruch 1, **dadurch gekennzeichnet, dass** das Kaliumalkoholat aus der Gruppe ausgewählt ist, umfassend die Kaliumamylat, Kaliumisoamylat, Kalium-tert-Amylat, Kaliumhexanolat, Kalium-2-methylhexanolat, Kalium-2-ethylhexanolat, Kaliumheptanolat, Kalium-2-Methylheptanolat, Kalium-2-Ethylheptanolat, Kaliumoctanolat, Kaliumlapromolate, einschließlich polyfunktionelle gemischte Kaliumlapromolat-Tetrahydrofurfurylate, die Natrium und Elemente der Gruppe 2 enthalten, oder eine Mischung davon.

5. Verfahren nach Anspruch 1, **dadurch gekennzeichnet, dass** eine Verbindung mit einem Heteroatom als ED verwendet wird, wobei vorzugsweise der ED mit einem Heteroatom aus der Gruppe ausgewählt ist, die Tetrahydrofuran (THF), Triethylamin, Tripropylamin, Triisopropylamin, Diethylether, Dipropylether, Diisopropylether oder eine Mischung davon umfasst, wobei am meisten bevorzugt der ED Tetrahydrofuran (THF) ist.

6. Verfahren nach Anspruch 5, **dadurch gekennzeichnet, dass** die Menge des ED 0,3 bis 2 Mol pro 1 Mol aktives Lithium des Organolithium-Initiators beträgt, vorzugsweise die Menge des ED 0,4 bis 1 Mol pro 1 Mol beträgt, und

am meisten bevorzugt die Menge des ED 0,5 bis 0,8 Mol pro 1 Mol aktives Lithium des Organolithium-Initiators beträgt.

**7.** Verfahren nach Anspruch 1, **dadurch gekennzeichnet, dass** eine Verbindung mit zwei und mehr Heteroatomen als ED verwendet wird, wobei vorzugsweise der ED mit zwei oder mehr Heteroatomen aus der Gruppe ausgewählt ist, die Ethylenglykoldimethylether (Monoglyme), Diethylenglykoldimethylether (Diglyme), 2,2-Bis(2'-tetrahydrofuryl)propan (DTHFP), N,N,N',N'-Tetramethylethylendiamin (TMEDA), Methyl-Tetrahydrofurfurylether, Ethyl-Tetrahydrofurfurylether, Propyl-Tetrahydrofurfurylether, Butyl-Tetrahydrofurfurylether, Isopropyl-Tetrahydrofurfurylether, sec-Butyltetrahydrofurfurylether, Isobutyltetrahydrofurfurylether, tert-Butyltetrahydrofurfurylether, Pentyltetrahydrofurfurylether, Hexyltetrahydrofurfurylether, Ethylenglykolmethyl-tert-butylether, Ethylenglykolethyl-tert.-butyl (EGETBE), Ditetrahydrofurfurylether, Diethylenglykoldiethylether, Diethylenglykoldipropylether, Diethylenglykoldiisopropylether, Diethylenglykoldibutylether, Diethylenglykoldiisobutylether oder Mischungen davon umfasst, wobei mehr bevorzugt der ED mit zwei oder mehr Heteroatomen aus der Gruppe ausgewählt ist, die 2, 2-Bis(2'-tetrahydrofuryl)propan (DTHFP), N,N,N',N'-Tetramethylethylendiamin (TMEDA), Methyltetrahydrofurfurylether, Ethylenglykoldimethylether, Ethylenglykolethyl-tert.-butylether und Ditetrahydrofurfurylether umfasst, wobei am meisten bevorzugt der ED mit zwei oder mehr Heteroatomen aus DTHFP und TMEDA ausgewählt ist.

**8.** Verfahren nach Anspruch 7, **dadurch gekennzeichnet, dass** die Menge des ED mit zwei oder mehr Heteroatomen 0,01 bis 0,3 Mol pro 1 Mol aktives Lithium des Organolithium-Initiators beträgt, vorzugsweise der ED mit zwei oder mehr Heteroatomen 0,02 bis 0,2 Mol pro 1 Mol beträgt, am meisten bevorzugt der ED mit zwei oder mehr Heteroatomen 0,03 bis 0,1 Mol pro 1 Mol aktives Lithium des Organolithium-Initiators beträgt.

**9.** Verfahren nach Anspruch 1, **dadurch gekennzeichnet, dass** die als endständige Modifikatoren verwendeten Verbindungen aus der Gruppe ausgewählt sind, die Hexamethylcyclotrisiloxan (HMCTS), Octamethylcyclotetrasiloxan (OMCTS), Decamethylpentacyclosiloxan (DMPCS), Propylmethacrylat-Hepta-Butylcyclosiloxan, 1,3-Glycidylprop-Heptan-Isobutylcyclosiloxan, 1,1-Dimethyl-1-sila-2-oxacyclosiloxan, 2,2,4-Trimethyl-1-oxa-4-aza-2-silacyclohexan, N-Methyl-epsilon-caprolactam, N-Methylpyrrolidon, 2-Vinylpyridin, 4-Vinylpyridin umfasst, wobei vorzugsweise der endständige Modifikator aus Octamethylcyclotetrasiloxan, 1,1-Dimethyl-1-sila-2-oxacyclosiloxan und 2-Vinylpyridin ausgewählt ist.

**10.** Verfahren nach Anspruch 9, **dadurch gekennzeichnet, dass** der endständige Modifikator in Form einer 1-20%-igen Lösung in einem aliphatischen oder aromatischen Lösungsmittel verwendet wird.

**11.** Verfahren nach Anspruch 10, **dadurch gekennzeichnet, dass** die Modifizierlösung im Voraus oder unmittelbar vor der Verwendung hergestellt wird.

**12.** Verfahren nach Anspruch 1, **dadurch gekennzeichnet, dass** zusätzlich Verzweigungsmittel verwendet werden.

**13.** Verfahren nach Anspruch 12, **dadurch gekennzeichnet, dass** das Verzweigungsmittel aus der Gruppe ausgewählt ist, die Zinntetrachlorid, Siliciumtetrachlorid, Hexachlorparaxylen, Hexachlordisilan, 1,3-Bistrichlorsilanylpropan, 1,4-Bis-trichlorsilanylbutan, Bis-trichlorsilanylethan, und Trichlorsilylbenzol umfasst, wobei vorzugsweise das Verzweigungsmittel aus Zinntetrachlorid, Siliciumtetrachlorid, Hexachlorparaxylen, Hexachlordisilan und Trichlorsilanylethan ausgewählt ist, wobei am meisten bevorzugt das Verzweigungsmittel aus Zinntetrachlorid und Siliciumtetrachlorid ausgewählt ist.

**14.** Copolymere mit einem geringen Gehalt an Vinylgruppen, hergestellt nach einem Verfahren nach einem der Ansprüche 1 bis 13.

**15.** Copolymere nach Anspruch 14, **gekennzeichnet durch** einen Gehalt an 1,2-Einheiten von 8 bis 12 Gew.-%, eine Molekulargewichtsverteilung von 1,12 bis 1,85 und eine Mooney-Viskosität von 66 bis 76 Moony-Einheiten.

**16.** Kautschukmischungen, enthaltend ein Copolymer nach einem der Ansprüche 14 bis 15 oder ein Copolymer, das nach einem Verfahren nach einem der Ansprüche 1 bis 13 hergestellt wird, und geeignete Zusatzstoffe.

## Revendications

**1.** Procédé de préparation de copolymères statistiques à faible teneur en groupes vinyliques par copolymérisation de diènes conjugués et de monomères vinylaromatiques à l'aide d'un initiateur organique-lithium, **caractérisé en ce**

**que** la copolymérisation est effectuée à une température de 70 à 130°C en présence d'un système donneur d'électrons comprenant un alcoolate de potassium de formule générale ROK, où R est un groupe aliphatique comprenant 5 à 15 atomes de carbone, et d'un additif donneur d'électrons (ED), suivi d'une modification avec au moins un composé choisi dans le groupe des cyclosiloxanes, oxocyclosiloxanes, lactames ou vinyl pyridines.

**2.** Procédé selon la revendication 1, **caractérisé en ce que** la copolymérisation est effectuée à une température de 80 à 120°C, de préférence à une température de 90 à 110°C.

**3.** Procédé selon la revendication 1, **caractérisé en ce qu'**un rapport molaire des composants du système donneur d'électrons ED/ROK est compris entre (0,1-10).

**4.** Procédé selon la revendication 1, **caractérisé en ce que** l'alcoolate de potassium est choisi dans le groupe comprenant l'amylate de potassium, l'isoamylate de potassium, le tert-amylate de potassium, l'hexanolate de potassium, le 2-méthylhexanolate de potassium, le 2-éthylhexanolate de potassium, l'heptanolate de potassium, le 2-méthylhexanolate de potassium, le 2-éthylhexanolate de potassium, l'octanolate de potassium, les lapromolates de potassium, y compris les mixtes lapromolate-tétrahydrofurfurylates de potassium polyfonctionnels contenant du sodium et des éléments du groupe 2, ou un mélange de ceux-ci.

**5.** Procédé selon la revendication 1, **caractérisé en ce qu'**un composé contenant un hétéroatome est utilisé comme DE, de préférence DE avec un hétéroatome est choisi dans le groupe comprenant le tétrahydrofuranne (THF), la triéthylamine, la tripropylamine, la triisopropylamine, l'éther diéthylique, l'éther dipropylique, l'éther diisopropylique, ou un mélange de ceux-ci, le plus préférablement ED est le tétrahydrofurane (THF).

**6.** Procédé selon la revendication 5, **caractérisé en ce que** la quantité de l'ED est de 0,3 à 2 moles pour 1 mole de lithium actif de l'initiateur organique-lithium, de préférence la quantité de l'ED est de 0,4 à 1 mole pour 1 mole, plus préférentiellement la quantité de DE est de 0,5 à 0,8 mole pour 1 mole de lithium actif de l'initiateur organique-lithium.

**7.** Procédé selon la revendication 1, **caractérisé en ce qu'**un composé contenant deux hétéroatomes ou plus est utilisé comme DE, de préférence le DE avec deux hétéroatomes ou plus est choisi dans le groupe comprenant l'éther diméthylique d'éthylèneglycol (monoglyme), l'éther diméthylique de diéthylèneglycol (diglyme), 2,2-bis(2'-tétrahydrofuryl)propane (DTHFP), N,N,N',N'-tétraméthyléthylènediamine (TMEDA), éther tétrahydrofurfurylique de méthyle, éther tétrahydrofurfurylique d'éthyle, éther tétrahydrofurfurylique de propyle, éther tétrahydrofurfurylique de butyle, éther tétrahydrofurfurylique d'isopropyle, éther tétrahydrofurfurylique de sec-butyle, éther tétrahydrofurfurylique d'isobutyle, éther tétrahydrofurfurylique de tert-butyle, éther tétrahydrofurfurylique de pentyle, éther tétrahydrofurfurylique de hexyle, éther méthyl-tert-butylique d'éthylèneglycol, éther éthyl tert-butylique d'éthylèneglycol (EGETBE), éther ditétrahydrofurfurylique, éther éthylique de diéthylène glycol, éther dipropylique de diéthylène glycol, éther diisopropylique de diéthylène glycol, éther dibutylique de diéthylène glycol, éther diisobutylique de diéthylène glycol ou des mélanges de ceux-ci, plus préférentiellement l'ED avec deux hétéroatomes ou plus est choisi dans le groupe comprenant 2,2-bis(2'-tétrahydrofuryl)propane (DTHFP), N,N,N',N'-tétraméthyléthylènediamine (TMEDA), éther tétrahydrofurfurylique de méthyle, éther diméthylique d'éthylène glycol, éther éthyl tert-butylique d'éthylèneglycol et éther ditétrahydrofurfurylique, le plus préférentiellement l'ED avec deux hétéroatomes ou plus est choisi parmi DTHFP et TMEDA.

**8.** Procédé selon la revendication 7, **caractérisé en ce que** la quantité de DE avec deux hétéroatomes ou plus est de 0,01 à 0,3 mole pour 1 mole de lithium actif de l'initiateur organique-lithium, de préférence la quantité de DE avec deux hétéroatomes ou plus est de 0,02 à 0,2 mole pour 1 mole, le plus préférentiellement la quantité de DE avec deux hétéroatomes ou plus est de 0,03 à 0,1 mole pour 1 mole de lithium actif l'initiateur organique-lithium.

**9.** Procédé selon la revendication 1, **caractérisé en ce que** les composés utilisés comme modificateurs terminaux sont choisis dans le groupe comprenant l'hexaméthylcyclotrisiloxane (HMCTS), l'octaméthylcyclotétrasiloxane (OMCTS), le décaméthylpentacyclosiloxane (DMPCS), le propylméthacrylate-heptabutylcyclosiloxane, le 1,3-glycidylprop-heptane-isobutyl-cyclosiloxane, le 1,1-diméthyl-1-sila-2-oxacyclosiloxane, le 2,2,4-triméthyl-1-oxa-4-aza-2-silacyclohexane, le N-méthyl-epsacyclosiloxane, le 1,1-diméthyl-1-sila-2-oxacyclosiloxane, le 2,2,4-triméthyl-1-oxa-4-aza-2-silacyclohexane, le N-méthyl-epsilon-caprolactame, le N-méthyl-pyrrolidone, la 2-vinylpyridine, le 4-vinylpyridine, de préférence le modificateur terminal est choisi parmi l'octaméthylcyclotétrasiloxane, le 1,1-diméthyl-1-sila-2-oxacyclosiloxane et la 2-vinylpyridine.

**10.** Procédé selon la revendication 9, **caractérisé en ce que** le modificateur terminal est utilisé sous la forme d'une

solution à 1-20 % dans un solvant aliphatique ou aromatique.

**11.** Procédé selon la revendication 10, **caractérisé en ce que** la solution de modificateur est préparée à l'avance ou directement avant utilisation.

**12.** Procédé selon la revendication 1, **caractérisé par** l'utilisation d'agents de ramification.

**13.** Procédé selon la revendication 12, **caractérisé en ce que** l'agent de ramification est choisi dans le groupe comprenant le tétrachlorure d'étain, le tétrachlorure de silicium, l'hexachloroparaxylène, l'hexachlorodisilane, le 1,3-bis-trichlorosilanylpropane, le 1,4-bis-trichlorosilanylbutane, le bis-trichlorosilanyléthane et le trichlorosilylbenzène, de préférence l'agent de ramification est choisi parmi le tétrachlorure d'étain, le tétrachlorure de silicium, l'hexachloroparaxylène, l'hexachlorodisilane et le trichlorosilanyléthane, et plus préférablement l'agent de ramification est choisi parmi le tétrachlorure d'étain et le tétrachlorure de silicium.

**14.** Copolymères à faible teneur en groupes vinyliques préparés par un procédé selon l'une quelconque des revendications 1 à 13.

**15.** Copolymères selon la revendication 14, **caractérisés par** une teneur en unités 1,2 de 8 à 12 % en poids, une distribution des masses moléculaires de 1,12 à 1,85 et une viscosité Mooney de 66 à 76 unités Moony.

**16.** Mélanges de caoutchouc comprenant un copolymère selon les revendications 14 à 15 ou un copolymère préparé par un procédé selon l'une quelconque des revendications 1 à 13, et des additifs appropriés.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- GB 994726 A
- GB 1029445 A
- RU 2377258
- RU 2562458
- US 7884168 B
- US 3944528 A
- US 3903019 A
- US 4129705 A
- US 4933401 A
- US 5959039 A
- US 7825202 B2
- RU 2339651
- RU 2598075
- RU 94024075